# NEUE EUROPÄISCHE PATENTSCHRIFT

(11) **EP 1 591 825 B2**
(45) Veröffentlichungstag und Bekanntmachung des Hinweises auf die Entscheidung über den Einspruch: **13.01.2016**
(45) Hinweis auf die Patenterteilung: 02.09.2009
(21) Anmeldenummer: 05012775.2
(22) Anmeldetag: 22.12.1999
(51) Int. Cl.: G02B 21/00, G02B 27/10

(54) **Vorrichtung zur Einkopplung von Licht in einen Strahlengang eines Mikroskops**
Device for coupling light into the light path of a micropscope
Dispositif de couplage de la lumière dans le parcours de la lumière d'un microscope

(30) Priorität: 22.12.1998 DE 19859314; 03.08.1999 DE 19936573
(43) Veröffentlichungstag der Anmeldung: 02.11.2005
(62) Teilanmeldung aus: 99964647.4
(73) Patentinhaber: Carl Zeiss Microscopy GmbH, 07745 Jena (DE)
(72) Erfinder: Wolleschensky, Ralf, 07743 Jena (DE)
(74) Vertreter: Heim, Hans-Karl

(56) Entgegenhaltungen:
- EP-A- 0 148 803
- EP-A1- 0 148 803
- WO-A-97/30371
- WO-A1-97/30371
- WO-A1-99/42884
- DE-A1- 19 633 185
- JP-A- H01 282 515
- US-A- 5 418 371
- PATENT ABSTRACTS OF JAPAN Bd. 014, Nr. 059 (P-1000), 2. Februar 1990 (1990-02-02) & JP 01 282515 A (TOKYO ELECTRON LTD), 14. November 1989 (1989-11-14)

## Beschreibung

Die vorliegende Erfindung betrifft eine Vorrichtung zur Einkopplung von Licht in einen Strahlengang eines Mikroskops.

In der prioritätsälteren nachveröffentlichten WO 99/42884 ist eine optische Anordnung beschrieben, bei der mit Hilfe eines AOTF oder AOD als akustooptischem Element Laserstrahlung eines Lasers oder mehrerer Laser in erster Beugungsordnung in ein Mikroskop, insbesondere ein konfokales Fluoreszenz-Laser-Scanning-Mikroskop, eingekoppelt wird.

Mit Hilfe eines nachgeschalteten weiteren AOTF werden dort einzelne Wellenlängen in ihrer Leistung nach der Strahlzusammenführung selektiv geregelt.

Gegenstand von US 4,627,730 ist ein elektronisch rasterbares Mikroskop, bei dem zur Teilung des Anregungslichts in einen zu rasternden Strahl und einen Referenzstrahl eine Bragg-Zelle als akustooptisches Element vorgesehen ist.

In EP 0 503 236 A2 ist eine Vorrichtung und ein Verfahren zur mikroskopischen Untersuchung von Proben, insbesondere von Halbleiter-Chips, beschrieben, bei denen eine Probe mit besonders großer numerischer Apertur und somit besonders guter Auflösung untersucht werden kann.

US 5,751,417 bezieht sich auf eine Anordnung zur konfokalen Fluoreszenz-Mikroskopie, bei der als dispersive Elemente eine Mehrzahl von Prismen vorgesehen sind und bei welcher zur Auswahl von gewünschten Wellenlängenbereichen zur Detektion im Strahlengang ein verschiebbares Gitter angeordnet ist.

In EP 0 562 488 Al ist eine Vorrichtung zum hochauflösenden Abrastern, wie etwa ein Laser-Rastermikroskop, ein Strichcode-Scanner oder ein Laserdrucker, beschrieben. Zur Erhöhung der Auflösung wird dabei im Strahlengang ein holographisches Gitter angeordnet, durch das sowohl anregendes als auch reflektiertes Licht hindurchtreten.

EP 0 620 458 Al bezieht sich auf einen optischen Wellenleiter, der aus einem Material gefertigt ist, welches eine Anisotropie des Brechungsindex aufweist. Bei Verwendung dieses Wellenleiters in einem konfokalen Rastermikroskop kann unter Ausnutzung des elektrooptischen Effekts die Polarisationsrichtung des Anregungslichts unterschiedlich zu derjenigen des reflektierten oder Detektionslichts eingestellt werden.

In JP-04157413 ist ein Rastermikroskop offenbart, bei dem zur Regelung einer Anregungsintensität ein akustooptischer Modulator im Strahlengang angeordnet ist.

WO 97/30371 betrifft ein Lichtmikroskop, bei dem zum Auftrennen eines Lichtstrahls in zwei Strahlen unterschiedlicher Polarisation ein erster AOTF vorgesehen ist. Nach einem Objektiv ist ein zweiter AOTF angeordnet, der von einer Probe kommendes Licht filtert.

In EP 0 327 425 Al ist ein Verfahren und eine Vorrichtung zur konfokalen optischen Mikroskopie beschrieben, bei denen zur schnelleren Aufnahme von dreidimensionalen mikroskopischen Bildern mehrere Laser unterschiedlicher Wellenlänge vorgesehen sind. Die unterschiedlichen Wellenlängen werden dabei durch akustooptische Modulatoren moduliert und mit Strahlteilern in einen Strahlengang eingekoppelt.

Gegenstand von JP-01282515 ist ein Rastermikroskop, bei dem das Licht einer Mehrzahl von Lasern unterschiedlicher Wellenlänge in einen Mikroskopstrahlengang eingekoppelt wird. Jede Farbe kann dabei vor Eintritt in den Strahlengang mit einem akustooptischen Modulator moduliert werden. Außerdem ist zur Intensitätsmodulation des Gesamtstrahls ein nachgeschalteter akustooptischer Modulator vorgesehen.

Gegenstand der DE 196 33 185 Al ist eine Punktlichtquelle für ein Laserscan-Mikroskop und ein Verfahren zum Einkoppeln von mindestens zwei Lasern unterschiedlicher Wellenlänge in ein Laserscan-Mikroskop. Zum Vereinigen des Lichts mehrerer Laserquellen ist ein dichroitischer Strahlvereiniger mit einer Mehrzahl von Teilerspiegeln vorgesehen.

DE 197 02 753 Al betrifft ein Laser-Scanning-Mikroskop, bei dem zum Einkoppeln von Strahlung in einen Lichtleiter ein AOTF verwendet wird. Dieser AOTF lenkt das Licht ab, wenn nicht eingekoppelt werden soll.

In DE 196 27 568 Al ist eine Anordnung und ein Verfahren zur konfokalen Mikroskopie beschrieben, wobei das Licht einer Mehrzahl von Lasern mit einem Beugungsgitter in einen Mikroskopstrahlengang eingekoppelt wird.

EP 0 148 803 ist eine Anordnung zur Auftrennung eines mehrfarbigen Strahls in eine Mehrzahl von parallelen einfarbigen Strahlen beschrieben. Hierzu werden mehrere akustooptische Elemente bei jeweils unterschiedlichen Frequenzen betrieben.

Aufgabe der Erfindung ist es, eine Vorrichtung zur Einkopplung von Licht in einen Strahlengang eines Mikroskops zu schaffen, mit welcher eine verbesserte Einleitung des Lichts in den mikroskopischen Strahlengang und eine verbesserte Trennung von Anregungslicht und wellenlängenverschobenem Emissionslicht möglich ist.

Diese Aufgabe wird nach der Erfindung durch eine Vorrichtung mit den Merkmalen des Anspruchs 1 gelöst.

Offenbart wird außerdem eine Anordnung eines Licht beugenden Elementes zur Separierung von Anregungs- und Emissionslicht in einem mikroskopischen Strahlengang, vorzugsweise in einem konfokalen Mikroskop, und insbesondere in einem Laser-Scanning-Mikroskop.

Bei dieser Anordnung kann das Licht beugende Element sowohl vom Anregungslicht als auch vom Emissionslicht durchlaufen werden.

Das von der Probe emittierte Licht kann aus Anteilen des Anregungslichtes und wellenlängenverschobenen Fluoreszenzanteilen bestehen.

Vorteilhaft beeinflusst das Licht beugende Element mindestens eine Wellenlänge der Anregung durch Beugung, während andere von der Probe emittierte Wellenlängen das Element unbeeinflusst durchlaufen und dadurch räumlich vom Anregungslicht getrennt werden.

Bevorzugt ist außerdem, wenn das Licht beugende Element durch Frequenzänderung von einer ersten Wellenlänge eines ersten Lasers auf eine zweite Wellenlänge eines zweiten Lasers umgeschaltet wird.

Weiterhin kann im Anregungsstrahlengang vor dem Element und/oder im Detektionsstrahlengang nach dem Element zur verbesserten Trennung der Lichtanteile mindestens ein die Lichtrichtung beeinflussendes optisches Element vorgesehen sein.

Als Licht beugendes Element kann bevorzugt ein AOTF vorgesehen sein.

Als optisches Element kann außerdem ein Reflexionselement und/oder ein Licht brechendes Element vorgesehen sein.

Möglich ist auch eine Anordnung eines Licht beugenden Elementes zur Separierung von Anregungs- und Emissionslicht in einem mikroskopischen Strahlengang, vorzugsweise in einem konfokalen Mikroskop, und insbesondere in einem Laser-Scanning-Mikroskop, insbesondere wie vorstehend beschrieben, wobei dieses auch zur Regelung der Anregungsintensität eingesetzt wird.

Bevorzugt ist darüber hinaus eine Anordnung mehrerer Licht beugender Elemente in einem mikroskopischen Strahlengang, vorzugsweise in einem konfokalen Mikroskop, und insbesondere in einem Laser-Scanning-Mikroskop, insbesondere wie oben offenbart, wobei diese simultan oder einzeln zur Einkopplung unterschiedlicher Wellenlängen eingesetzt werden.

Dabei können in Richtung der Detektion zuerst AOTF und dann AOM eingesetzt werden.

Bevorzugt ist in diesem Zusammenhang insbesondere, wenn AOTF und/oder AOM als Licht beugende Elemente eingesetzt werden.

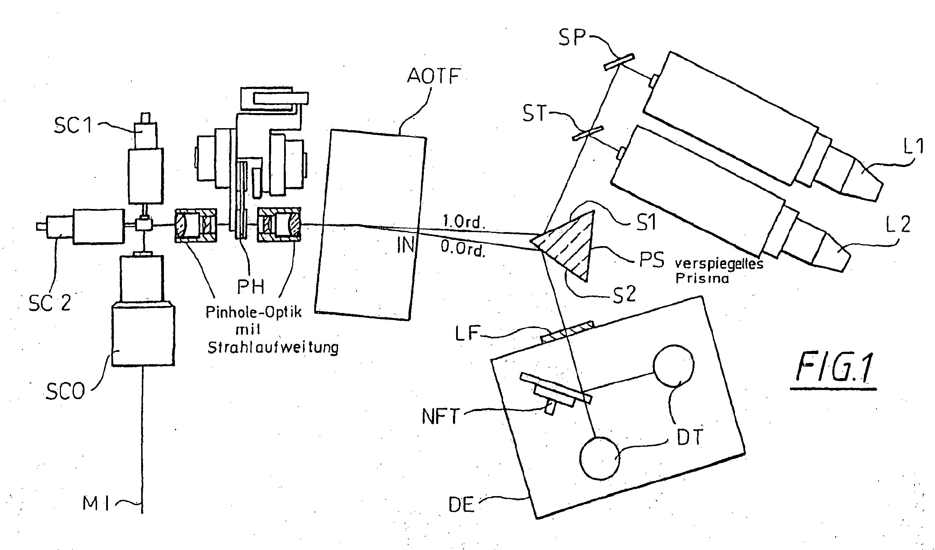

In den Figuren 1 bis 3, die nicht Ausführungsvarianten der Erfindung betreffen, werden beispielhaft die vorbeschriebenen Anordnungen erläutert. In Fig. 1 wird über einen Spiegel SP und einen Strahlteiler ST das Licht (Anregungslicht) zweier Laser L1, L2 mit unterschiedlichen Wellenlängen in einen gemeinsamen Strahlengang eingekoppelt, der an der Seite S1 eines verspiegelten Prismas in Richtung eines AOTF (Acousto-Optical Tunable Filter) reflektiert wird.

Das Anregungslicht wird in den AOTF eingeführt, wobei in der ersten Ordnung gebeugtes Licht für über die Ansteuerfrequenz des AOTF eingestellte Wellenlänge genau in Richtung eines Pinholes PH mit vor- und nachgeordneter Pinholeoptik PHO zur Einstellung des Strahlprofiles abgelenkt wird, während andere mögliche Wellenlängen ungebeugt in nullter Ordnung den AOTF durchqueren und nicht auf das Pinhole gelangen. Das Pinhole PH dient hier gleichzeitig als Anregungs- und Detektionspinhole. Über Scaneinheiten SC1, SC2 und eine Scanoptik SCO wird das Anregungslicht in Richtung eines mikroskopischen Strahlengangs MI in Richtung einer Probe abgebildet. Das von der Probe emittierte Licht, bestehend aus Anteilen des Anregungslichtes und wellenlängenverschobenen Fluoreszenzanteilen, durchläuft den Lichtweg in umgekehrter Richtung bis zum AOTF. Hier gelangen die Wellenlängenanteile des Anregungslichtes wiederum über die Beugung erster Ordnung auf die Spiegelseite S1 des Prismas PS, während die Fluoreszenzanteile den AOTF ungebeugt in nullter Ordnung durchqueren und dadurch einen Winkel zum reflektierten Anregungslicht einnehmen.

Zwischen den rückkehrenden Strahlen nullter und erster Ordnung ist nun genau die Spitze zwischen den Prismenflächen S1 und S2 angeordnet, wodurch das Fluoreszenzlicht auf die Seite S2 trifft und von dieser in Richtung einer Detektionseinheit, hier beispielhaft bestehend aus einem Linienfilter LF, einem Farbteiler NFT und zwei Detektoren für unterschiedliche Wellenlängen, reflektiert wird.

Durch die niedrige Bandbreite des AOTF von ca. 2 nm Bandbreite für das Anregungslicht wirkt er als extremer Kantenfilter mit deutlichen Vorteilen etwa gegen dichroitische Filter mit Bandbreiten größer 10 nm. Das ist von besonderer Bedeutung, weil der Abstand von Anregungswellenlänge und Fluoreszenzwellenlängen kleiner als 10 nm sein kann und durch die erfindungsgemäße Anordnung eine wellenlängenabhängige Trennung dennoch möglich ist. Durch Frequenzänderung kann der AOTF von der Wellenlänge des Lasers L1 auf die Wellenlänge des Lasers L2 umgeschaltet werden und wiederum das Anregungslicht vom Fluoreszenzlicht getrennt werden.

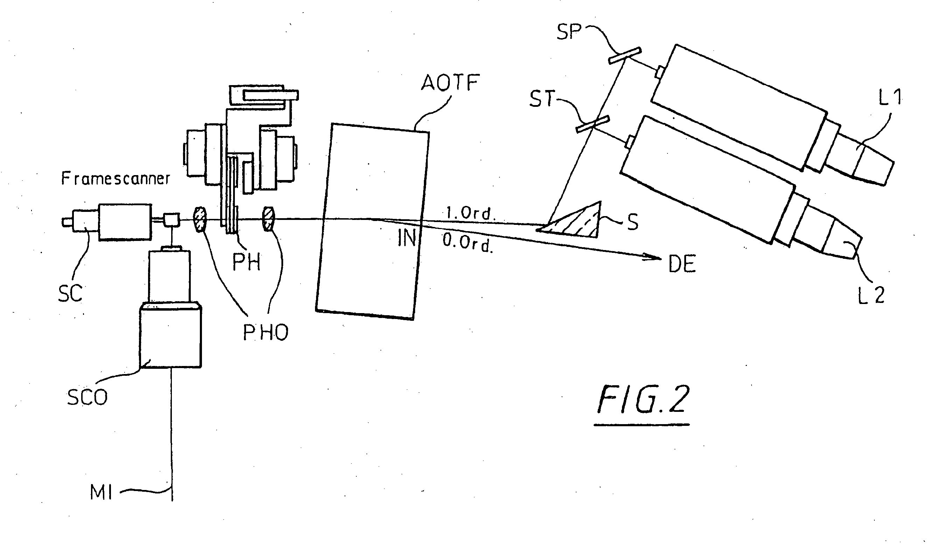

Statt des Prismas mit den Seiten S1, S2 können auch zwei unabhängige, den Seiten S1, S2 entsprechende, aber nicht zusammenhängende Spiegel verwendet werden. Ein Vorteil ist, dass diese auch drehbar ausgebildet sein können, um eine genaue Einstellung auf den AOTF bzw. die Detektion DE zu ermöglichen. In Fig. 2 ist eine ähnliche Anordnung mit nur einem Scanner SC dargestellt. Hier ist statt des Prismas ein Spiegel S vorgesehen, der das Anregungslicht in Richtung des AOTF analog zu Fig. 1 umlenkt, wobei hier das in nullter Ordnung zurückkehrende Fluoreszenzlicht durch den AOTF hindurchgehende Licht neben dem Spiegel S verläuft und auf diese Weise in Richtung einer hier nicht dargestellten Detektion gelangt.

Grundsätzlich sind auch Anordnungen denkbar, bei der der AOTF allein als Separationseinheit von Anregungslicht und Fluoreszenzlicht dienen kann, indem das Laserlicht in Richtung der ersten Ordnung ohne ein vorgeschaltetes Element in den AOTF gelangt und das Detektionslicht unter einem Winkel zum Anregungslicht den AOTF verlässt und direkt in eine Detektionseinheit gelangt, was lediglich Auswirkungen auf die Baulänge hat, da der Winkel mit beispielsweise vier Grad recht klein ausfällt und Überlagerungen der Wellenlängenanteile vermieden werden sollen.

Weiterhin kann auch nur für das Fluoreszenzlicht ein separierender Spiegel vorgesehen sein.

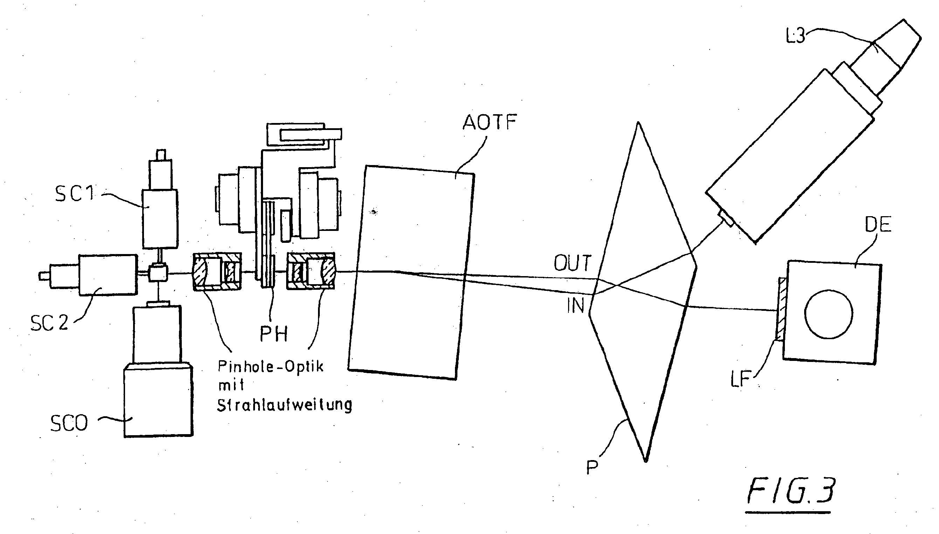

In Fig. 3 ist eine weitere vorteilhafte Ausführung in Form eines unverspiegelten Prismas vorgesehen, das durch Brechung das Licht eines Anregungslasers in erster Ordnung in den AOTF hineinführt und die nullte Ordnung (das Fluoreszenzlicht) in Richtung der Detektion DE ablenkt. Durch den Winkel zwischen erster und nullter Ordnung und unterschiedlicher Wellenlängen ist vorteilhaft eine deutliche Separierung der Wellenlängenanteile möglich.

Die Erfindung ist besonders vorteilhaft in einem Laser-Scanning-Mikroskop mit einem AOTF anwendbar.

Andere vorteilhafte Anwendungen eines anderen Licht beugenden Elementes zur Strahlungstrennung durch verschiedene Beugungsordnungen sind jedoch in einem mikroskopischen Strahlengang denkbar und vorteilhaft in den Umfang der Erfindung eingeschlossen. So kann dieses vorteilhaft zur Regelung der Anregungsintensität eingesetzt werden.

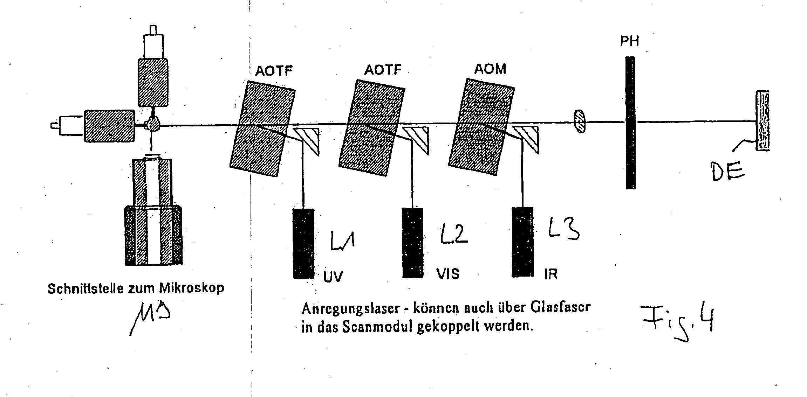

In Fig. 4 ist eine erfindungsgemäße Vorrichtung gezeigt. Dort sind vorteilhaft mehrere derartige Elemente, hier AOTF und AOM im Laserstrahlengang zur Einkopplung der Laserstrahlung vorgesehen. Hier können mehrere Laserlinien L1-L3 wie UV/VIS oder IR simultan mit voneinander unabhängig einstellbarer Anregungsleistung oder einzeln eingekoppelt werden.

## Patentansprüche

1. Vorrichtung zur Einkopplung von Licht in einen Strahlengang eines Mikroskops, insbesondere eines konfokalen Fluoreszenz-Lasermikroskops,
mit drei Lasern (L1, L2, L3), welche Licht unterschiedlicher Wellenlänge aussenden, in welcher
ein AOM und zwei AOTFs als akustooptische Elemente vorgesehen sind und
einem der Laser (L1, L2, L3) der AOM und den beiden anderen Lasern jeweils ein AOTF zugeordnet ist,
**dadurch gekennzeichnet,**
**dass** zur Zusammenführung von Licht der Laser (L1, L2, L3) die akustooptischen Elemente auf einer gemeinsamen optischen Achse angeordnet sind und
**dass** die unterschiedlichen Wellenlängen durch Beugung in den jeweiligen akustooptischen Elementen simultan oder einzeln in die gemeinsame optische Achse eingekoppelt und in der gemeinsamen optischen Achse zusammengeführt werden und
**dass** in Richtung der Mikroskopoptik (SC1, SC2, SCO, M1) als akustooptische Elemente (AOM, AOTF) zuerst der AOM und anschließend die beiden AOTFs vorgesehen sind.

## Claims

1. Device for coupling light into a beam path of a microscope, in particular a confocal fluorescence laser microscope,
comprising three lasers (L₁, L₂, L₃), which emit light of different wavelengths,
in which an AOM and two AOTFs are provided as acousto-optical elements and said AOM is assigned to one of the lasers (L₁, L₂, L₃) and an AOTF is assigned to each of the two other lasers,
**characterized in that**
said acousto-optical elements are arranged on a common optical axis for combining light of said lasers (L₁, L₂, L₃) and
that the different wavelengths are coupled-in simultaneously or individually into the common optical axis and are combined in the common optical axis through diffraction in the respective acousto-optical elements and
that in the direction of the microscope optics (SC1, SC2, SCO, M1) first said AOM and in the following said two AOTFs are provided as acousto-optical elements (AOM, AOTF).

## Revendications

1. Dispositif pour envoyer de la lumière sur un trajet des rayons d'un microscope, en particulier un microscope laser confocal à fluorescence,
avec trois lasers (L1, L2, L3), qui émettent de la lumière de différentes longueurs d'onde,
dans lequel un AOM et deux AOTF sont prévues comme éléments opto-acoustiques, et à l'un des lasers (L1, L2, L3) est associé l'AOM et aux deux autres lasers sont associés à chaque fois à un AOTF,
**caractérisé :**
**en ce que**, pour regrouper la lumière des lasers (L1, L2, L3), les éléments opto-acoustiques sont placés sur un axe optique commun, et
**en ce que** les différentes longueurs d'onde sont envoyées dans l'axe optique commun et regroupées sur l'axe optique commun simultanément ou séparément par diffraction dans les éléments opto-acoustiques respectifs, et
**en ce que**, dans la direction de l'optique (SC1, SC2, SCO, M1) du microscope, il est prévu d'abord l'AOM puis les deux AOTF comme éléments opto-acoustiques (AOM, AOTF).
